# EUROPÄISCHE PATENTANMELDUNG

(11) **EP 4 344 979 A1**
(43) Veröffentlichungstag der Anmeldung: **03.04.2024**
(21) Anmeldenummer: 23197162.3
(22) Anmeldetag: 13.09.2023
(51) Int. Cl.: B61L 25/02, B61L 27/40, G01S 5/02

(54) **MESSVERFAHREN UND EINRICHTUNG ZUM EINMESSEN EINER EISENBAHNGLEISANLAGE**

(30) Priorität: 26.09.2022 DE 102022210102
(71) Anmelder: Siemens Mobility GmbH, 81739 München (DE)
(72) Erfinder: Kurz, Fabian, 80807 München (DE); Zoeke, Dominik, 91448 Emskirchen (DE); Brämer, Emanuel, 12355 Berlin (DE); Matthee, Wilfried, 38259 Salzgitter (DE); Schienbein, Manfred, 89275 Elchingen (DE); Zerb, Marcus, 85662 Hohenbrunn (DE)
(74) Vertreter: Siemens Patent Attorneys

(57) **Zusammenfassung**

Die Erfindung bezieht sich unter anderem auf ein Verfahren zum Ermitteln der Position einer ortsfesten Station (S2) einer Eisenbahngleisanlage (10), wobei die ortsfeste Station (S2) in ihrem Sende- und Empfangsbereich (SE2) mit Schienenfahrzeugen (12) Funksignale (F1) austauschen kann. Erfindungsgemäß ist vorgesehen, dass sich der Sende- und Empfangsbereich (SE2) der ortsfesten Station (S2) in einem Überlappungsbereich (U1) mit dem Sende- und Empfangsbereich (SE1) einer ortsfesten Nachbarstation (S1) überschneidet, deren Position bekannt ist, wobei ein Gleis (11) der Eisenbahngleisanlage (10) durch diesen Überlappungsbereich (U1) hindurch verläuft, zwischen einem auf dem Gleis (11) im Überlappungsbereich (U1) fahrenden Schienenfahrzeug (12) und der Nachbarstation (S1) Funksignale (F1) übertragen werden, die eine Ermittlung der jeweiligen Position des Schienenfahrzeugs (12) anhand der bekannten Position der Nachbarstation (S1) sowie eine Ermittlung des Gleisverlaufs (GV) im Überlappungsbereich (U1) ermöglichen, und anhand der Funksignale (F1) der Gleisverlauf (GV) im Überlappungsbereich (U1) ermittelt wird, im Überlappungsbereich (U1) zwischen dem Schienenfahrzeug (12) und der ortsfesten Station (S2) Funksignale (F2) übertragen werden, die eine Ermittlung der jeweiligen Relativposition des Schienenfahrzeugs (12) relativ zur ortsfesten Station (S2) ermöglichen, und anhand des zuvor ermittelten Gleisverlaufs (GV) im Überlappungsbereich (U1) und anhand der Relativposition des Schienenfahrzeugs (12) relativ zur ortsfesten Station (S2) die Position der ortsfesten Station (S2) ermittelt wird.

## Beschreibung

Die Erfindung bezieht sich auf Verfahren und Einrichtungen zum Einmessen von Komponenten einer Eisenbahngleisanlage.

Um eine optimale Betriebsabwicklung im Bahnverkehr zu gewährleisten, ist es vorteilhaft, eine durchgängige Echtzeitlokalisierung aller Schienenfahrzeuge durchführen zu können. Eine technische Lösung dafür würde die Verwendung eines Funklokalisierungssystems ermöglichen; damit dieses jedoch akkurate Ergebnisse liefern kann, muss nicht nur die Funklokalisierung als solche gut funktionieren, d. h. eine Punkt-zu-Punkt-Entfernungs- und ggf. Winkelmessung zwischen ortsfesten Stationen und beweglichen Elementen wie beispielsweise Schienenfahrzeugen zur Verfügung stehen, es ist darüber hinaus auch eine genaue Kenntnis zumindest der Standorte der ortsfesten Stationen des Funklokalisierungssystems nötig. Wünschenswert wäre darüber hinaus, wenn auch der genaue Streckenverlauf von Gleisen der Eisenbahngleisanlage bekannt wäre.

Der Erfindung liegt die Aufgabe zugrunde, ein Verfahren zum Ermitteln der Position einer ortsfesten Station einer Eisenbahngleisanlage anzugeben, das sich einfach durchführen lässt und sehr genaue Positionsangaben liefert.

Diese Aufgabe wird erfindungsgemäß durch ein Verfahren gemäß Patentanspruch 1 gelöst. Vorteilhafte Ausgestaltungen des erfindungsgemäßen Verfahrens sind in Unteransprüchen angegeben.

Danach ist erfindungsgemäß ein Verfahren zum Ermitteln der Position einer ortsfesten Station einer Eisenbahngleisanlage vorgesehen, wobei die ortsfeste Station in ihrem Sende- und Empfangsbereich mit Schienenfahrzeugen Funksignale austauschen kann. Bei dem erfindungsgemäßen Verfahren ist vorgesehen, dass sich der Sende- und Empfangsbereich der ortsfesten Station in einem Überlappungsbereich mit dem Sende- und Empfangsbereich einer ortsfesten Nachbarstation überschneidet, deren Position bekannt ist, wobei ein Gleis der Eisenbahngleisanlage durch diesen Überlappungsbereich hindurch verläuft, zwischen einem auf dem Gleis im Überlappungsbereich fahrenden Schienenfahrzeug und der Nachbarstation Funksignale übertragen werden, die eine Ermittlung der jeweiligen Position des Schienenfahrzeugs anhand der bekannten Position der Nachbarstation sowie eine Ermittlung des Gleisverlaufs im Überlappungsbereich ermöglichen, und anhand der Funksignale der Gleisverlauf im Überlappungsbereich ermittelt wird, im Überlappungsbereich zwischen dem Schienenfahrzeug und der ortsfesten Station Funksignale übertragen werden, die eine Ermittlung der jeweiligen Relativposition des Schienenfahrzeugs relativ zur ortsfesten Station ermöglichen, und anhand des zuvor ermittelten Gleisverlaufs im Überlappungsbereich und anhand der Relativposition des Schienenfahrzeugs relativ zur ortsfesten Station die Position der ortsfesten Station ermittelt wird.

Ein wesentlicher Vorteil des erfindungsgemäßen Verfahrens ist darin zu sehen, dass dieses beispielsweise von einem auf einem Gleis der Eisenbahngleisanlage fahrenden Schienenfahrzeug durchgeführt werden kann, vorzugsweise automatisiert, ohne dass Bedienhandlungen von Bedienpersonal erforderlich sind; beispielsweise kann es in einfacher Weise von autonom fahrenden Schienenfahrzeugen durchgeführt werden.

Vorteilhaft ist es, wenn zwischen dem Schienenfahrzeug und der ortsfesten Station außerhalb des Überlappungsbereichs Funksignale übertragen werden, die eine Ermittlung des Gleisverlaufs außerhalb des Überlappungsbereichs anhand der ermittelten Position der ortsfesten Station ermöglichen, und anhand dieser Funksignale der Gleisverlauf außerhalb des Überlappungsbereichs ermittelt wird.

Bei der letztgenannten Ausgestaltung ist es außerdem vorteilhaft, wenn die ortsfeste Station, deren Position wie beschrieben ermittelt wurde und somit bekannt ist, als eine Nachbarstation für eine weitere ortsfeste Station, deren Position ermittelt werden soll, herangezogen wird und die Position dieser weiteren ortsfesten Station anhand der Position ihrer Nachbarstation genauso ermittelt wird, wie zuvor die Position dieser Nachbarstation ermittelt wurde.

Der Gleisverlauf wird vorzugsweise im Sende- und Empfangsbereich der weiteren ortsfesten Station ermittelt wie zuvor der Gleisverlauf im Sende- und Empfangsbereich ihrer Nachbarstation.

Bei einer besonders bevorzugten Weiterbildung des Verfahrens ist vorgesehen, dass kettenartig die Positionen noch weiterer ortsfester Stationen anhand zuvor ermittelter Positionen vorgeordneter ortsfester Stationen, die für nachgeordnete Stationen jeweils als Nachbarstation fungieren, ermittelt werden.

Auch ist es von Vorteil, wenn sich zumindest zwei ortsfeste Stationen funkmäßig erreichen und sich diese Stationen unter Bildung weiterer Positionsdaten untereinander orten.

Die weiteren Positionsdaten werden vorzugsweise zur Korrektur und/oder Überprüfung der ermittelten Positionen der ortsfesten Stationen herangezogen.

Die Verfahrensschritte werden nach einem erfolgten ersten Einmessen bei einem erneuten Befahren desselben Streckenabschnitts bzw. desselben Gleises vorzugsweise ein- oder mehrfach wiederholt, um zusätzlich neue Messergebnisse zu erhalten. Die ersten Messergebnisse und die neuen Messergebnisse werden vorzugsweise einem Fehlerminimierungsverfahren unterworfen, um besonders genaue neue Positionsangaben für die Stationen und einen besonders genauen neuen Gleisverlauf für das Gleis zu ermitteln.

Die Erfindung bezieht sich außerdem auf eine Ortungseinrichtung. Erfindungsgemäß ist bezüglich der Ortungseinrichtung vorgesehen, dass diese derart ausgestaltet ist, dass sie in Zusammenarbeit mit einer Funkeinrichtung ein Verfahren wie oben beschrieben ausführen kann. Bezüglich der Vorteile der erfindungsgemäßen Ortungseinrichtung und deren vorteilhafter Ausgestaltungen sei auf die obigen Ausführungen im Zusammenhang mit dem erfindungsgemäßen Verfahren und dessen vorteilhafter Ausgestaltungen verwiesen.

Die Ortungseinrichtung ist vorzugsweise in einem Fahrzeugsteuergerät eines Schienenfahrzeugs implementiert.

Die Erfindung bezieht sich außerdem auf ein Schienenfahrzeug. Erfindungsgemäß ist bezüglich des Schienenfahrzeugs vorgesehen, dass dieses mit einer Funkeinrichtung und einer mit der Funkeinrichtung verbundenen Ortungseinrichtung wie oben beschrieben ausgestattet ist.

Vorteilhaft ist es, wenn das Schienenfahrzeug eine Recheneinrichtung und einen Speicher umfasst und die Ortungseinrichtung und/oder die Funktionalität, ein Verfahren wie oben beschrieben auszuführen, als Softwaremodul in dem Speicher abgespeichert ist.

Besonders vorteilhaft ist es, wenn die Ortungseinrichtung und/oder die Funktionalität, ein Verfahren wie oben beschrieben auszuführen, als Softwaremodul in einem Fahrzeugsteuergerät, insbesondere einem ATO-Fahrzeugsteuergerät, integriert ist.

Das Fahrzeugsteuergerät ermöglicht vorzugsweise ein autonomes Fahren des Schienenfahrzeugs und eine automatische Vermessung bzw. ein automatisches Einmessen während der fahrerlosen Fahrt.

Die Erfindung bezieht sich außerdem auf ein Computerprogrammprodukt. Erfindungsgemäß ist bezüglich des Computerprogrammprodukts vorgesehen, dass dieses bei Ausführung durch eine Recheneinrichtung die Recheneinrichtung veranlasst, mit einer Funkeinrichtung ein Verfahren wie oben beschrieben auszuführen.

Die Erfindung wird nachfolgend anhand von Ausführungsbeispielen näher erläutert, dabei zeigen beispielhaft:
- Figur 1: ein Ausführungsbeispiel für eine erfindungsgemäße Eisenbahngleisanlage, anhand derer beispielhaft ein erfindungsgemäßes Verfahren zum Einmessen von Komponenten der Eisenbahngleisanlage erläutert wird,
- Fig. 2-4: die Eisenbahngleisanlage gemäß Figur 1 in verschiedenen Verfahrensstadien während des Einmessens,
- Figur 5: ein weiteres Ausführungsbeispiel für eine erfindungsgemäße Eisenbahngleisanlage, anhand derer eine bevorzugte Einmessvariante erläutert wird, und
- Fig. 6-8: Ausführungsbeispiele für erfindungsgemäße Schienenfahrzeuge, die zum Einmessen der Eisenbahngleisanlage gemäß den Figuren 1 bis 5 geeignet sind.

In den Figuren werden der Übersicht halber für identische oder vergleichbare Komponenten dieselben Bezugszeichen verwendet.

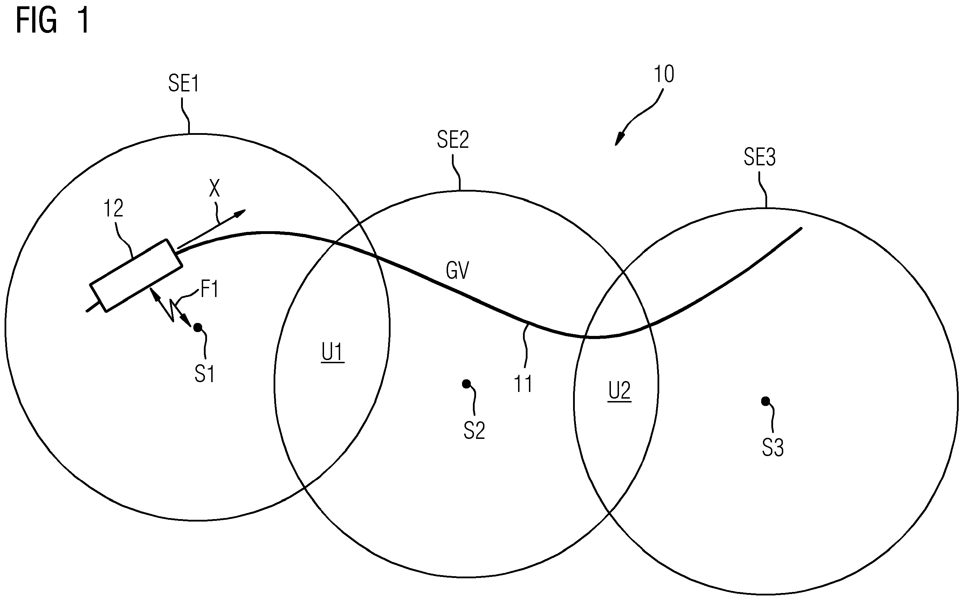

Die Figur 1 zeigt Bestandteile eines Ausführungsbeispiels für eine Eisenbahngleisanlage 10, anhand derer beispielhaft ein erfindungsgemäßes Verfahren zum Einmessen von Komponenten der Eisenbahngleisanlage 10 erläutert werden soll.

Der in der Figur 1 gezeigte Abschnitt der Eisenbahngleisanlage umfasst eine erste ortsfeste Station S1, eine zweite ortsfeste Station S2 und eine dritte ortsfeste Station S3. Die drei ortsfesten Stationen S1, S2 und S3 sind jeweils mit einer Funkeinrichtung ausgestattet, die eine Funkkommunikation mit Schienenfahrzeugen, die sich im Sende- und Empfangsbereich SE1, SE2, SE3 der jeweiligen ortsfesten Station befinden, ermöglichen.

Nachfolgend wird beispielhaft davon ausgegangen, dass sich die Sende- und Empfangsbereiche SE1, SE2, SE3 der drei ortsfesten Stationen S1, S2 und S3 jeweils paarweise überlappen, wodurch ein erster Überlappungsbereich U1 zwischen der ersten ortsfesten Station S1 und der zweiten ortsfesten Station S2 sowie ein zweiter Überlappungsbereich U2 zwischen der zweiten ortsfesten Station S2 und der dritten ortsfesten Station S3 gebildet wird.

Außerdem wird davon ausgegangen, dass ein Gleis 11 der Eisenbahngleisanlage 10 durch die Sende- und Empfangsbereiche aller drei ortsfester Stationen S1, S2 und S3 hindurch verläuft sowie auch die beiden Überlappungsbereiche U1 und U2 durchläuft.

Darüber hinaus wird beispielhaft davon ausgegangen, dass die Position der ersten ortsfesten Station S1 bekannt ist, wohingegen die Positionen der zweiten und dritten Station S2 und S3 sowie auch der Gleisverlauf GV des Gleises 11 unbekannt sind und messtechnisch erfasst werden sollen.

Zum Einmessen der Positionen der beiden ortsfesten Stationen S2 und S3 und des Gleisverlaufes GV kann eine in einem Schienenfahrzeug 12 der Eisenbahngleisanlage 10 implementierte Ortungseinrichtung eingesetzt werden, wie nachfolgend beispielhaft für den Fall einer Fahrt des Schienenfahrzeugs 12 auf dem Gleis 11 entlang der Fahrtrichtung X in Figur 1 erläutert werden soll.

Befindet sich das Schienenfahrzeug 12 im Sende- und Empfangsbereich SE1 der ersten ortsfesten Station S1, deren Position bekannt ist, so kann die Ortungseinrichtung des Schienenfahrzeugs 12 anhand der Funksignale F1, die zwischen dem Schienenfahrzeug 12 und der ersten ortsfesten Station S1 übertragen werden, seine jeweilige Position und damit auch den Gleisverlauf GV des Gleises 11 bestimmen.

Zu diesem Zwecke kann die Ortungseinrichtung des Schienenfahrzeugs 12 beispielsweise den Abstand zwischen dem Schienenfahrzeug 12 und der ortsfesten Station S1 messen, zum Beispiel im Rahmen eines Zwei-Wege-Verfahrens, das vorzugsweise auf der Basis eines Frequenzspreizverfahrens arbeitet, eines frequenzmodulierten Dauerstrichbetriebsverfahrens und/oder einer Signallaufzeitmessung, die die Signallaufzeit zwischen dem Schienenfahrzeug 12 und der ortsfesten Station S1 auswertet. Auch kann sie den Abstand durch Auswerten der Signalamplitude, die mit wachsendem Abstand abfällt, oder der Signaldämpfung, die mit wachsendem Abstand ansteigt, bestimmen.

Außerdem umfasst das Schienenfahrzeug 12 vorzugsweise eine Empfangseinrichtung mit zwei oder mehr in Fahrzeuglängsrichtung und/oder Fahrzeugquerrichtung beabstandeten Empfangseinheiten. Im Falle einer solchen Ausgestaltung kann die Ortungseinrichtung die Phasendifferenz zwischen den Empfangssignalen der Empfangseinheiten auswerten, um eine Richtungsinformation relativ zur ersten Station S1 zu gewinnen.

Darüber hinaus kann in der Ortungseinrichtung des Schienenfahrzeugs 12 ein Datensatz in Form einer ungenauen, nur groben Karte des Gleisverlaufs hinterlegt sein, um der Ortungseinrichtung im Falle von Zwei- oder Mehrdeutigkeiten bei der Funksignalauswertung die Auswahl der jeweils richtigen Ortsinformation zu ermöglichen bzw. unplausible Varianten zu verwerfen.

Im Übrigen können alle bekannten Verfahren zur Ortung von Funkkomponenten in Funksystemen anhand von Funksignalen herangezogen werden, um die jeweilige Position der Funkkomponenten zu ermitteln.

Der zuvor im Sende- und Empfangsbereich SE1 der ersten ortsfesten Station S1 unbekannte Gleisverlauf GV kann somit während der Fahrt des Schienenfahrzeugs 12 im Sende- und Empfangsbereich der ersten ortsfesten Station S1 von dem Schienenfahrzeug 12 ermittelt werden, indem es sich selbst mit Bezug auf die Position der ersten ortsfesten Station S1 ortet.

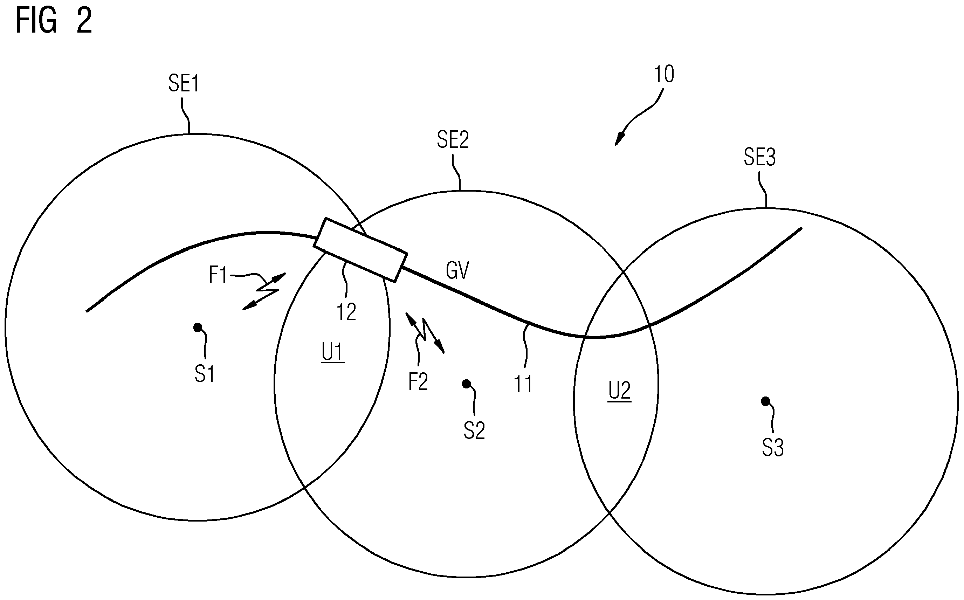

Erreicht, wie beispielhaft die Figur 2 zeigt, das Schienenfahrzeug 12 nun den ersten Überlappungsbereich U1 zwischen den Sende- und Empfangsbereichen SE1 und SE2 der ersten ortsfesten Station S1 und der zweiten ortsfesten Station S2, so kann das Schienenfahrzeug 12 auf der Basis der Funksignale F1, die es mit der ersten ortsfesten Station S1 austauscht, den Gleisverlauf GV auch im Überlappungsbereich U1 ermitteln, wie dies bereits im Zusammenhang mit der Figur 1 erläutert worden ist.

Darüber hinaus ist das Schienenfahrzeug 12 in der Lage, anhand seiner aktuellen eigenen Position bzw. des im ersten Überlappungsbereich U1 ermittelten Gleisverlaufs GV des Gleises 11 auch die noch unbekannte Position der zweiten ortsfesten Station S2 ermitteln, indem es anhand seiner ermittelten eigenen Position die Funksignale F2, die es mit der zweiten ortsfesten Station S2 austauscht, auswertet.

Mit anderen Worten kann das Schienenfahrzeug 12 während der Fahrt im ersten Überlappungsbereich U1 die Position der zweiten ortsfesten Station S2 ermitteln, weil es sich anhand der Funksignale F1, die es mit der ersten ortsfesten Station S1 austauschen kann, im Überlappungsbereich U1 in einem ersten Schritt zunächst selbst orten kann und anschließend in einem zweiten Schritt anhand der Funksignale F2, die es mit der zweiten ortsfesten Station S2 austauscht, die zweite ortsfeste Station S2 orten kann.

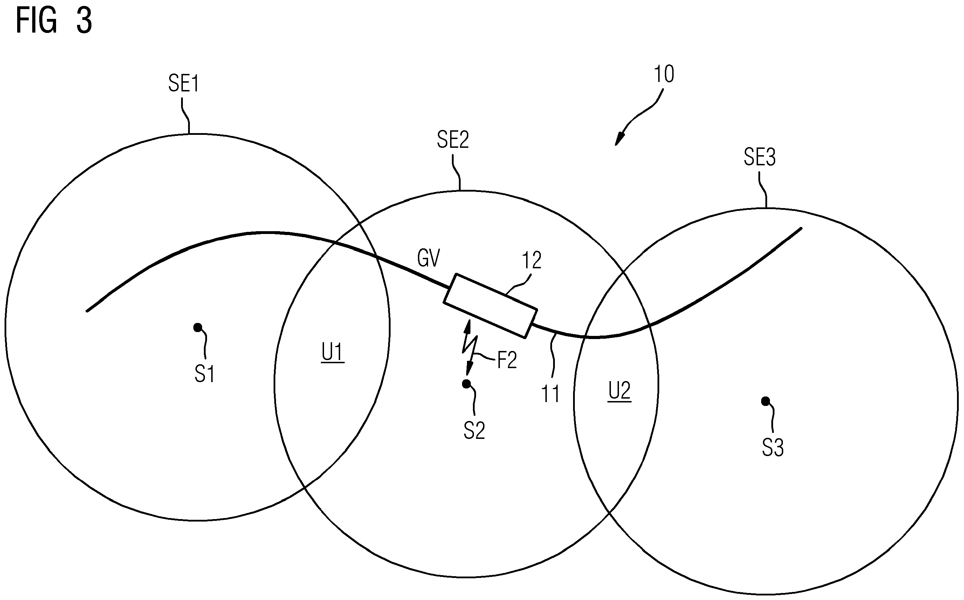

Die Figur 3 zeigt das Schienenfahrzeug 12 bei der weiteren Fahrt auf dem Gleis 11 im Sende- und Empfangsbereich SE2 der zweiten ortsfesten Station S2, die während der Fahrt im ersten Überlappungsbereich U1 bereits geortet wurde und deren Position nun auch bekannt ist, außerhalb des ersten Überlappungsbereichs U1. Die Position der zweiten ortsfesten Station S2 kann nun dazu verwendet werden, den Gleisverlauf GV des Gleises 11 im Sende- und Empfangsbereich SE2 der zweiten ortsfesten Station S2 außerhalb des ersten Überlappungsbereichs U1 zu vermessen.

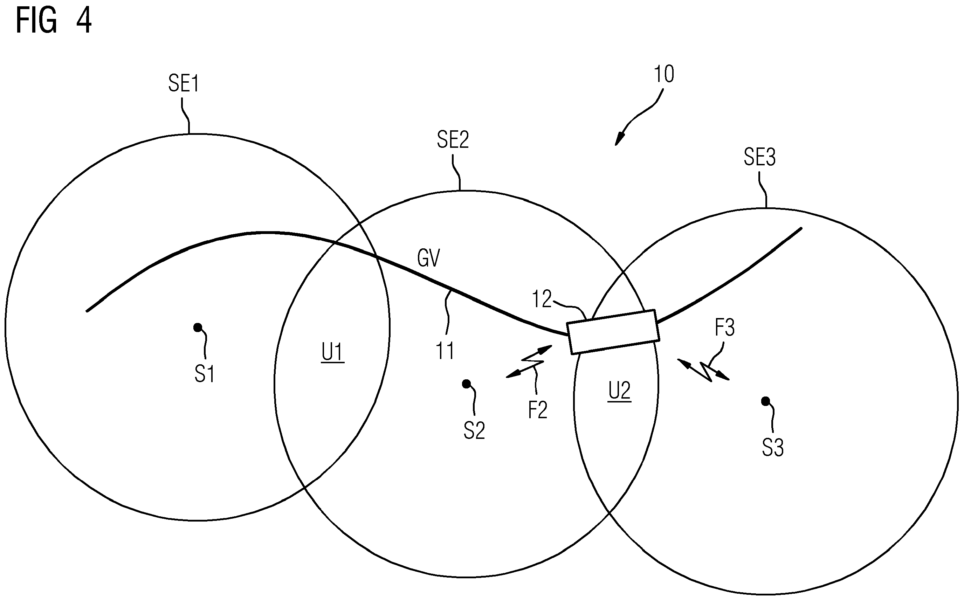

Sobald das Schienenfahrzeug 12 den zweiten Überlappungsbereich U2 zwischen den Sende- und Empfangsbereichen SE2 und SE3 der zweiten ortsfesten Station S2 und der dritten ortsfesten Station S3 erreicht, wie die Figur 4 zeigt, kann die Position der dritten ortsfesten Station S3 ermittelt werden, wie dies im Zusammenhang mit dem ersten Überlappungsbereich U1 und der Ortung der zweiten ortsfesten Station S2 beim Befahren des ersten Überlappungsbereichs U1 erläutert worden ist.

In der beschriebenen Art und Weise kann das Schienenfahrzeug 12 also während einer Fahrt auf dem Gleis 11 ausgehend von der Kenntnis der Position der ersten ortsfesten Station S1 die Positionen aller weiteren ortsfesten Stationen auf dem Gleis 11 sowie auch den Gleisverlauf GV des Gleises 11 bestimmen, sofern entlang der Strecke weitere ortsfeste Stationen vorhanden sind, deren Sende- und Empfangsbereiche sich paarweise überlappen und eine kontinuierliche Funkübertragung mit dem Schienenfahrzeug 12 ermöglichen.

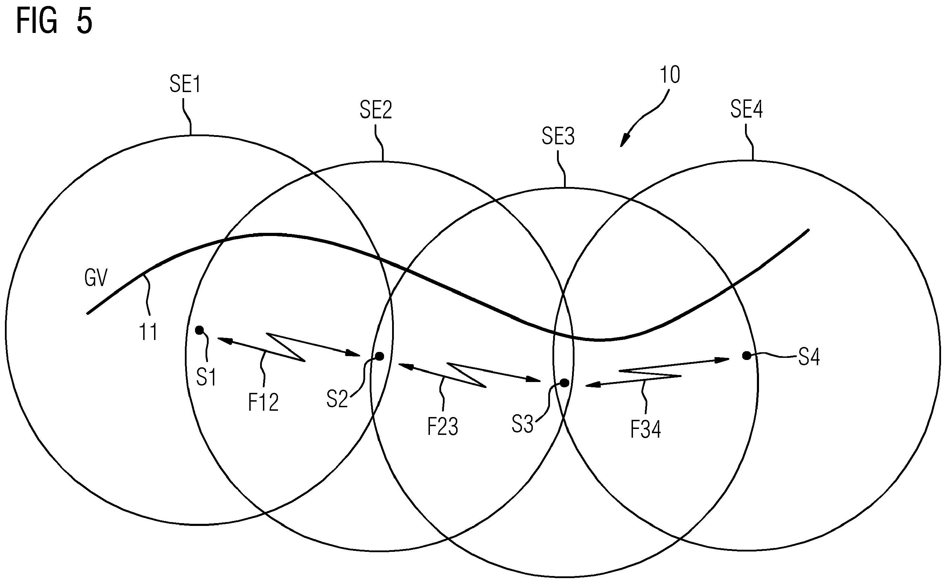

Die Figur 5 zeigt ein Ausführungsbeispiel für eine Eisenbahngleisanlage 10, bei der sich die Sende- und Empfangsbereiche ortsfester Stationen S1 bis S4 nicht nur paarweise in Form einer Kette überlappen, sondern die Sende- und Empfangsbereiche SE1-SE4 der ortsfesten Stationen S1 bis S4 auch so groß sind, dass die ortsfesten Stationen S1 bis S4 miteinander kommunizieren können und damit auch, sofern bekannt, ihre eigenen Positionen übermitteln können.

Bei dem Ausführungsbeispiel gemäß Figur 5 ist es beispielsweise möglich, dass die erste ortsfeste Station S1 ihre bekannte Position per Funksignal F12 unmittelbar an die zweite ortsfeste Station S2 übermittelt, sodass sich die zweite ortsfeste Station S2 anhand der Funksignale relativ zu der ersten ortsfesten Station S1 selbst orten kann, beispielsweise durch Auswerten von Signallaufzeiten und/oder Signalamplituden und/oder Phasen- bzw. Winkelinformationen, wie dies oben beispielhaft für die Ortung des Schienenfahrzeugs 12 relativ zur ersten ortsfesten Station S1 erläutert wurde.

Entsprechendes gilt für die anderen ortsfesten Stationen S3 und S4, die untereinander in entsprechender Weise per Funksignalen F23 und F34 kommunizieren und eine solche Selbstortung durchführen können, nachdem sie von der jeweils vorgeordneten ortsfesten Station deren Position erfahren haben.

Die im Zusammenhang mit der Figur 5 erläuterte Selbstortung der ortsfesten Stationen S1 bis S4 untereinander kann in vorteilhafter Weise mit der beschriebenen Ortung des Gleisverlaufs GV des Gleises 11 kombiniert werden, wenn das Schienenfahrzeug 12 das Gleis 11 befährt. In einem solchen Falle kann das Schienenfahrzeug 12 auf die Positionen der ortsfesten Stationen S1 bis S4 unmittelbar zugreifen, um sich selbst zu orten und damit den Gleisverlauf GV des Gleises 11 zu detektieren.

Auch können Ortungsinformationen, die den Ort der zweiten ortsfesten und der weiteren ortsfesten Stationen angeben und von dem Schienenfahrzeug 12 anhand der bekannten Position der ersten ortsfesten Station ermittelt worden sind, mit den Ortungsinformationen, die die ortsfesten Stationen untereinander selbst ermittelt haben, verglichen, gemittelt, einem Fehlerminimierungsverfahren unterzogen und/oder auf Plausibilität geprüft werden, um die Genauigkeit bzw. Verlässlichkeit der Positionsangaben der Stationen und die Genauigkeit bzw. Verlässlichkeit des eingemessenen Gleisverlaufs GV zu erhöhen.

Im Übrigen ist es möglich, nach einem erfolgten Einmessen die obigen Messschritte zu wiederholen und die neuen Messergebnisse und die vorherigen Messergebnisse einem Fehlerminimierungsverfahren zur Erzeugung besonders genauer neuer Positionsangaben zu unterwerfen.

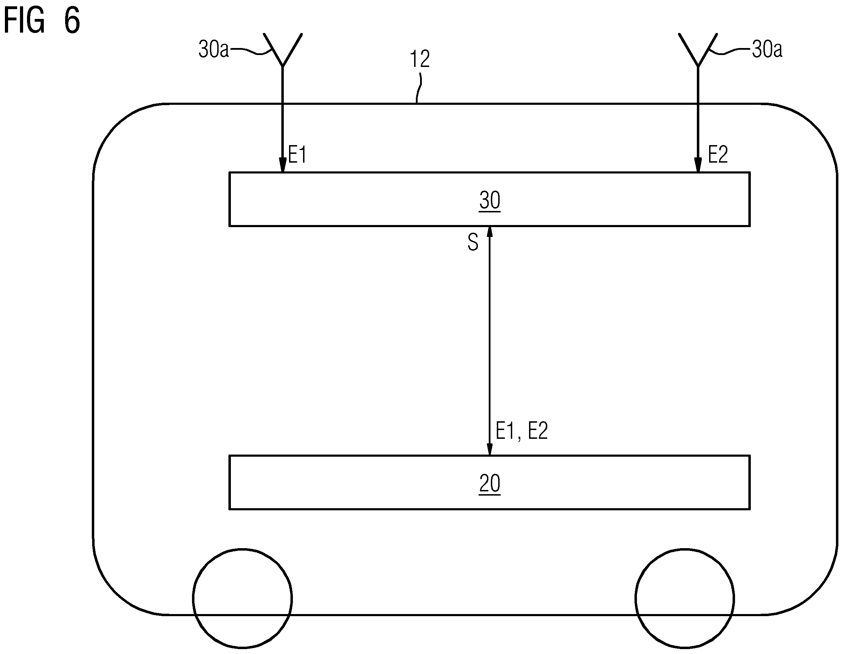

Die Figur 6 zeigt ein Ausführungsbeispiel für ein Schienenfahrzeug 12, das zur Durchführung des im Zusammenhang mit dem in den Figuren 1 bis 5 beschriebenen Einmessverfahrens eingesetzt werden kann.

Das Schienenfahrzeug 12 umfasst eine Ortungseinrichtung 20 und eine mit der Ortungseinrichtung 20 in Verbindung stehende Funkeinrichtung 30. Die Funkeinrichtung 30 ermöglicht es der Ortungseinrichtung 20, eine Kommunikation per Funk mit den ortsfesten Stationen S1 bis S4 durchzuführen, wie dies oben erläutert wurde, und das im Zusammenhang mit dem in den Figuren 1 bis 5 beschriebene Einmessverfahren durchzuführen.

Die Funkeinrichtung 30 umfasst eine Sendeeinrichtung zum Senden von Sendesignalen S und eine Empfangseinrichtung mit zwei oder mehr in Gleislängsrichtung/Fahrzeuglängsrichtung und/ oder Gleisquerrichtung/Fahrzeugquerrichtung beabstandeten Empfangseinheiten 30a. Der Versatz zwischen den Empfangseinheiten 30a ermöglicht es der Ortungseinrichtung 20, die Phasendifferenz zwischen den Empfangssignalen E1 und E2 der Empfangseinheiten 30a auswerten, um eine Richtungsinformation relativ zu den Stationen S1 bis S4 zu gewinnen.

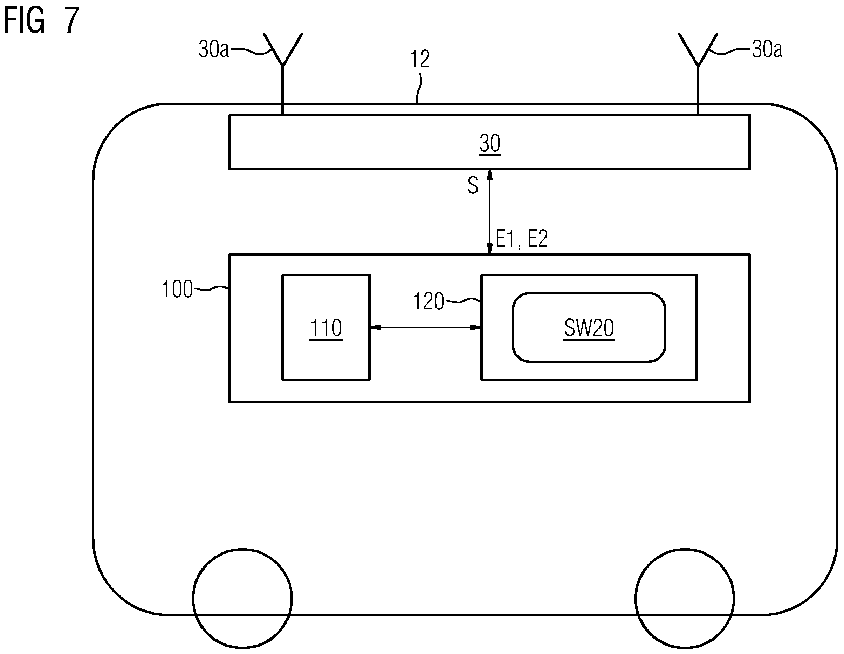

Die Figur 7 zeigt ein weiteres Ausführungsbeispiel für ein Schienenfahrzeug 12, das zur Durchführung des im Zusammenhang mit dem in den Figuren 1 bis 5 beschriebenen Einmessverfahrens eingesetzt werden kann. Bei dem Ausführungsbeispiel gemäß Figur 7 ist die Ortungseinrichtung 20 bzw. die Funktion der Ortungseinrichtung 20 als Softwareprogrammprodukt in Form eines Softwaremoduls SW20 in einer Rechenanlage 100 integriert, die eine Recheneinrichtung 110 und einen Speicher 120 umfasst. Das Softwaremodul SW20 ist in dem Speicher 120 abgespeichert und veranlasst bei Ausführung durch die Recheneinrichtung 110 diese dazu, in Zusammenarbeit mit bzw. unter Ansteuerung der Funkeinrichtung 30 ein Einmessverfahren durchzuführen, wie es oben im Zusammenhang mit den Figuren 1 bis 5 erläutert wurde.

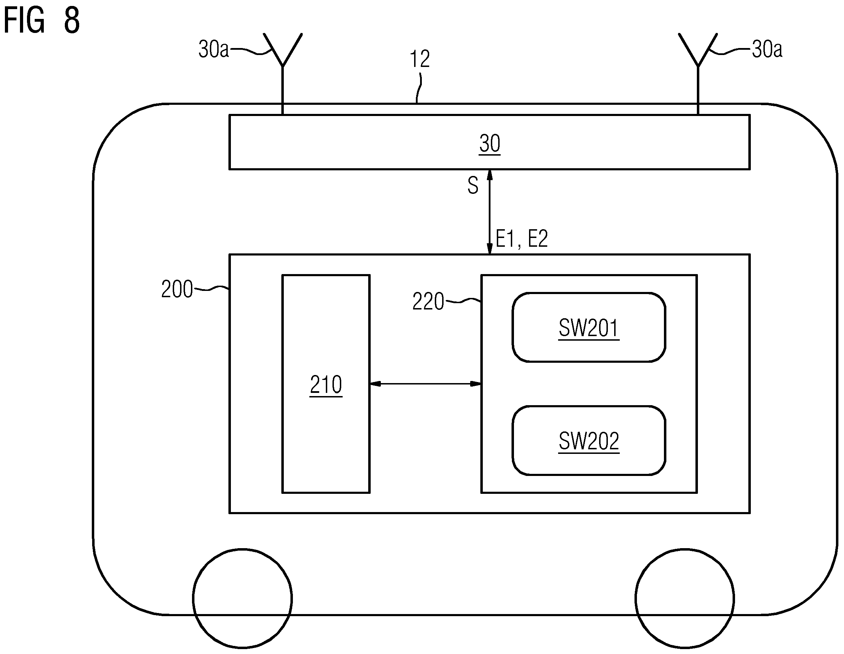

Besonders vorteilhaft ist es, wenn die Ortungseinrichtung 20 einen Bestandteil eines Fahrzeugsteuergeräts 200, insbesondere eines ATO-Fahrzeugsteuergeräts, bildet oder zumindest die Funktionalität der Ortungseinrichtung 20 in dem Fahrzeugsteuergerät 200 implementiert ist. Das Fahrzeugsteuergerät 200 ermöglicht vorzugsweise ein autonomes Fahren des Schienenfahrzeugs 12 und eine automatische Vermessung während der fahrerlosen Fahrt. Eine solche Ausgestaltung zeigt beispielhaft die Figur 8.

Beispielsweise kann das Fahrzeugsteuergerät 200 einen Steuergerätrechner 210 und einen Fahrzeugspeicher 220 umfassen und es kann in dem Fahrzeugspeicher 220 ein Softwareprogrammprodukt in Form eines Softwaremoduls SW201 abgespeichert sein, das bei Ausführung durch den Steuergerätrechner 210 diesen dazu veranlasst, in Zusammenarbeit mit bzw. unter Ansteuerung der Funkeinrichtung 30 ein Einmessverfahren durchzuführen, wie es oben im Zusammenhang mit den Figuren 1 bis 5 erläutert wurde. Ein in dem Fahrzeugspeicher 220 abgespeichertes Softwaremodul SW202 ermöglicht die fahrerlose Fahrt des Schienenfahrzeugs 12.

Das Fahrzeugsteuergerät 200 bzw. dessen Softwaremodul SW201 ist vorzugsweise derart ausgestaltet, dass es im Rahmen des autonomen Fahrbetriebs nach einem erfolgten ersten Einmessen bei einem erneuten Befahren desselben Streckenabschnitts bzw. desselben Gleises 11 die obigen Messschritte bezüglich des Gleisverlaufs GV und bezüglich der Positionen der Stationen S2 bis S4 wiederholt, beispielsweise regelmäßig wiederholt, und die neuen und alten Messergebnisse einem Fehlerminimierungsverfahren unterwirft, um besonders genaue neue Positionsangaben für die Stationen S2 bis S4 und den Gleisverlauf GV des Gleises 11 zu ermitteln.

Im Zusammenhang mit den Ausführungsbeispielen gemäß den Figuren 1 bis 8 wurde beispielhaft davon ausgegangen, dass das Einmessen und das Bestimmen der Positionen der ortsfesten Stationen S2 bis S4 und das Bestimmen des Gleisverlaufs GV in bzw. von dem Schienenfahrzeug 12 durchgeführt wird; alternativ wäre es auch möglich, lediglich die Rohdaten bzw. die Kommunikationssignale im Schienenfahrzeug zu erfassen und an eine externe Einrichtung (z. B. externer Cloudrechner) weiterzuleiten, sei es während der Fahrt oder - im Falle einer Zwischenspeicherung - nach der Fahrt, und das Einmessen während oder nach Abschluss der Fahrt von der externe Einrichtung durchführen zu lassen.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder mehreren anderen Unteransprüchen, um weitere andere Ausführungsbeispiele zu erhalten.

## Patentansprüche

1. Verfahren zum Ermitteln der Position einer ortsfesten Station (S2) einer Eisenbahngleisanlage (10), wobei die ortsfeste Station (S2) in ihrem Sende- und Empfangsbereich (SE2) mit Schienenfahrzeugen (12) Funksignale (F1) austauschen kann,
**dadurch gekennzeichnet, dass**
- sich der Sende- und Empfangsbereich (SE2) der ortsfesten Station (S2) in einem Überlappungsbereich (U1) mit dem Sende- und Empfangsbereich (SE1) einer ortsfesten Nachbarstation (S1) überschneidet, deren Position bekannt ist, wobei ein Gleis (11) der Eisenbahngleisanlage (10) durch diesen Überlappungsbereich (U1) hindurch verläuft,
- zwischen einem auf dem Gleis (11) im Überlappungsbereich (U1) fahrenden Schienenfahrzeug (12) und der Nachbarstation (S1) Funksignale (F1) übertragen werden, die eine Ermittlung der jeweiligen Position des Schienenfahrzeugs (12) anhand der bekannten Position der Nachbarstation (S1) sowie eine Ermittlung des Gleisverlaufs (GV) im Überlappungsbereich (U1) ermöglichen, und anhand der Funksignale (F1) der Gleisverlauf (GV) im Überlappungsbereich (U1) ermittelt wird,
- im Überlappungsbereich (U1) zwischen dem Schienenfahrzeug (12) und der ortsfesten Station (S2) Funksignale (F2) übertragen werden, die eine Ermittlung der jeweiligen Relativposition des Schienenfahrzeugs (12) relativ zur ortsfesten Station (S2) ermöglichen, und anhand des zuvor ermittelten Gleisverlaufs (GV) im Überlappungsbereich (U1) und anhand der Relativposition des Schienenfahrzeugs (12) relativ zur ortsfesten Station (S2) die Position der ortsfesten Station (S2) ermittelt wird.

2. Verfahren nach Anspruch 1,
**dadurch gekennzeichnet, dass**
- zwischen dem Schienenfahrzeug (12) und der ortsfesten Station (12) außerhalb des Überlappungsbereichs (U1) Funksignale (F2) übertragen werden, die eine Ermittlung des Gleisverlaufs (GV) außerhalb des Überlappungsbereichs (U1) anhand der ermittelten Position der ortsfesten Station (S2) ermöglichen, und anhand dieser Funksignale (F2) der Gleisverlauf (GV) außerhalb des Überlappungsbereichs (U1) ermittelt wird.

3. Verfahren nach Anspruch 2,
**dadurch gekennzeichnet, dass**
- die ortsfeste Station (S2), deren Position wie beschrieben ermittelt wurde und somit bekannt ist, als eine Nachbarstation für eine weitere ortsfeste Station (S3), deren Position ermittelt werden soll, herangezogen wird und
- die Position dieser weiteren ortsfesten Station (S3) anhand der Position ihrer Nachbarstation (S2) genauso ermittelt wird, wie zuvor die Position dieser Nachbarstation (S2) ermittelt wurde.

4. Verfahren nach Anspruch 3,
**dadurch gekennzeichnet, dass**
- der Gleisverlauf (GV) im Sende- und Empfangsbereich (SE3) der weiteren ortsfesten Station (S3) ermittelt wird wie zuvor der Gleisverlauf (GV) im Sende- und Empfangsbereich (SE2) ihrer Nachbarstation (S2).

5. Verfahren nach Anspruch 3 oder 4,
**dadurch gekennzeichnet, dass**
- kettenartig die Positionen noch weiterer ortsfester Stationen (S4) anhand zuvor ermittelter Positionen vorgeordneter ortsfester Stationen, die für nachgeordnete Stationen jeweils als Nachbarstation fungieren, ermittelt werden.

6. Verfahren nach einem der voranstehenden Ansprüche,
**dadurch gekennzeichnet, dass**
- sich zumindest zwei ortsfeste Stationen (S1-S4) funkmäßig erreichen und sich diese Stationen unter Bildung weiterer Positionsdaten untereinander orten und
- die weiteren Positionsdaten zur Korrektur und/oder Überprüfung der ermittelten Positionen der ortsfesten Stationen herangezogen werden.

7. Verfahren nach einem der voranstehenden Ansprüche,
**dadurch gekennzeichnet, dass**
- die Verfahrensschritte nach einem erfolgten ersten Einmessen unter Bildung erster Messergebnisse bei einem erneuten Befahren desselben Gleises (11) wiederholt werden und neue Messergebnisse erzeugt werden und
- die ersten Messergebnisse und die neuen Messergebnisse einem Fehlerminimierungsverfahren unterworfen werden und neue Positionsangaben für die Stationen (S2-S4) und ein neuer Gleisverlauf (GV) für das Gleis (11) ermittelt wird.

8. Ortungseinrichtung (20),
**dadurch gekennzeichnet, dass** die Ortungseinrichtung (20) dazu ausgestaltet ist, in Zusammenarbeit mit einer Funkeinrichtung (30) ein Verfahren nach einem der voranstehenden Ansprüche auszuführen.

9. Ortungseinrichtung (20) nach Anspruch 8,
**dadurch gekennzeichnet, dass** die Ortungseinrichtung (20) in einem Fahrzeugsteuergerät (200) eines Schienenfahrzeugs (12) implementiert ist.

10. Schienenfahrzeug,
**dadurch gekennzeichnet, dass** das Schienenfahrzeug (12) mit einer Funkeinrichtung (30) und einer mit der Funkeinrichtung (30) verbundenen Ortungseinrichtung (20) nach Anspruch 8 oder 9 ausgestattet ist.

11. Schienenfahrzeug nach Anspruch 10,
**dadurch gekennzeichnet, dass**
- das Schienenfahrzeug (12) eine Recheneinrichtung (110, 210) und einen Speicher (120, 220) umfasst und
- die Ortungseinrichtung (20) nach Anspruch 8 oder 9 und/oder die Funktionalität, ein Verfahren nach einem der voranstehenden Ansprüche 1 bis 7 auszuführen, als Softwaremodul (SW20, SW201) in dem Speicher (120, 220) abgespeichert ist.

12. Schienenfahrzeug nach Anspruch 10 oder 11,
**dadurch gekennzeichnet, dass**
- die Ortungseinrichtung (20) nach Anspruch 8 oder 9 und/oder die Funktionalität, ein Verfahren nach einem der voranstehenden Ansprüche 1 bis 7 auszuführen, in einem Fahrzeugsteuergerät (200), insbesondere einem ATO-Fahrzeugsteuergerät, integriert ist.

13. Schienenfahrzeug nach Anspruch 12,
**dadurch gekennzeichnet, dass** das Fahrzeugsteuergerät (200) ein autonomes Fahren des Schienenfahrzeugs (12) und eine automatische Vermessung während der fahrerlosen Fahrt ermöglicht.

14. Computerprogrammprodukt (SW20, SW201),
**dadurch gekennzeichnet, dass** das Computerprogrammprodukt bei Ausführung durch eine Recheneinrichtung diese veranlasst, ein Verfahren nach einem der voranstehenden Ansprüche 1 bis 7 auszuführen.
